# EUROPEAN PATENT APPLICATION

(11) **EP 4 239 246 A1**
(43) Date of publication of application: **06.09.2023**
(21) Application number: 21885414.9
(22) Date of filing: 25.10.2021
(51) Int. Cl.: F22B 7/02, F22B 13/04

(54) **COMBUSTION BOILER**

(30) Priority: 28.10.2020 ES 202031079
(71) Applicant: Cordón Urbiola, Jose, Luis, 31589 Sartaguda (Navarra) (ES)
(72) Inventor: Cordón Urbiola, Jose, Luis, 31589 Sartaguda (Navarra) (ES)
(74) Representative: Isern Patentes y Marcas S.L.
(86) International application number: PCT/ES2021/070774
(87) International publication number: WO 2022/090600

(57) **Abstract**

The invention relates to a combustion boiler that comprises a liquid tank (3) in which one or more combustion chambers (1) and a series of flue gas pipes (2) are submerged, such that the chambers (1) are above the pipes (2), the final flue gas outlet being at the lowest point. The inlet (5) of cold liquid to the tank (3) is lower and the outlet (4) of vapour or hot liquid is higher.

## Description

### TECHNICAL FIELD

The present invention relates to a boiler for heating water and producing vapour by combustion that offers a great reduction in energy consumption.

### STATE OF THE ART

Combustion boilers generally comprise a combustion chamber and a gas outlet. One or more coils heat the liquid until causing it to evaporate or proceeding to its extraction and use for its intended purpose. Where appropriate, the extraction requires a reboiler that separates the gas (vapour) from the liquid.

The liquid, generally water, when it is about to evaporate, is at a homogeneous temperature that increases the possible losses through the surface, which entails not being able to adequately recover all the heat from the flue gas and implies that the inlet of cold water is very detrimental to vapour production. Therefore, the water is preheated, which complicates the management and construction of the boiler, or the tank is oversized so that the new water is not too detrimental to the temperature (so energy is lost in heating unnecessary water).

The applicant is not aware of any boiler similar to that of the invention, or that can be considered a solution to the same technical problems.

### BRIEF EXPLANATION OF THE INVENTION

The invention consists of a combustion boiler according to the claims.

It is a highly efficient and safe boiler, which can accept water or another liquid (oil...) without the need for preheating as it occurs on its own given the arrangement of the combustion chamber and the gas extraction pipes.

In addition, this arrangement allows the heating speed to be increased and the time it takes for the vapour to be generated to be reduced. In turn, the flue gas can be extracted at a low temperature, so heat losses are very low.

Specifically, the combustion boiler comprises one or more combustion chambers, a series of flue gas pipes (at least one) and a liquid tank with an outlet of vapour or hot liquid and an inlet of cold liquid. In addition, in a novel manner, both the chambers and the pipes are submerged in the liquid of the tank, the chambers being above the pipes. In parallel, the inlet of liquid occurs through a lower point of the tank while the exit of vapour is through a higher point. The circulation of the flue gas can be by natural draft, by the forced draft of the burners, or by a gas extractor compressor...

Since the combustion chambers are at the upper portion, they produce hightemperature vapour or liquid instantly.

This boiler allows a whole series of advantages to be obtained:
1. They can be made about four times smaller, and produce the same or more vapour, since they do not have any negative effect when cold water enters the boiler.
2. It produces vapour almost instantly, because the same burner has to produce vapour with much less water, up to one eighth of the usual amount.
3. There is no need to heat all of the liquid to produce the desired high temperature fluid. As the combustion chambers are arranged in the upper portion of the boiler, only the liquid to be extracted is heated to that temperature.
4. When heating from the top downwards, an effect of inverted coils is created: the flue gas or gases downwards due to their draft, forced or not, and the liquid upwards by heating.
5. By being able to have more combustion chambers, the same or more contact surface is achieved, but leaving much more space for the passage of flue gas or gases.
6. One hundred percent of the combustion is used, since the flue gas or gases reach the outside at the temperature that the cold water enters the boiler (between 15° and 25°).

Consequently, by having so many advantages over conventional ones, it could be said that they are highly ecological since to produce the same vapour they need half the fuel, entailing very high energy and ecological savings.

The pipes form a tube exchanger arranged horizontally through which the combustion flue gas circulates downwards, descending through the different levels. With this, the flue gas is cooled, making the most of combustion, and ensuring that the maximum temperature is at the upper portion, with the outlet of the boiler. Each liquid level has different temperatures, so that the liquid that enters through the lower portion is preheated and rises due to its density to the combustion chambers, which is where it reaches the highest temperature. Consequently, the entering liquid may be at room temperature.

Preferably, the flue gas outlet is at the lowest point of the pipe inside the tank.

In this way, the downwards flue gas outlet makes the boiler itself work as two coils. The flue gas descends while the heated liquid rises. Consequently, in a simple way and without the need for complex equipment, the maximum heat is recovered from combustion. This effect is produced by generating a thermal gradient within the tank itself, which places the hottest liquid at the highest portion, where the outlet is.

Other particular embodiments will be discussed later.

### DESCRIPTION OF THE DRAWINGS

For a better understanding of the invention, the following figures are included, showing particular embodiments.
Figure 1 represents a schematic cross-section of a first exemplary embodiment in a first direction.
Figure 2 represents a schematic cross-section of a second exemplary embodiment according to a second direction, perpendicular to the first, marking the path of the liquid as it heats up and of the flue gas as it leaves the combustion chamber.

### EMBODIMENTS OF THE INVENTION

An embodiment of the invention is briefly described below, as an illustrative and non-limiting example thereof.

The example shown in the figures corresponds to a vapour generating boiler. It comprises a boiler with one or more combustion chambers (1), a series of flue gas pipes (2) and a tank (3) for water or liquid to be heated that has an upper outlet (4) of vapour or hot water and a lower inlet (5) of new water or from the condenser.

It can be seen that the chambers (1) are horizontal, with a front fuel inlet (of any type: liquid, solid, gas... for example, wood pellets or organic waste) and a rear outlet of flue gas. The pipes (2) are arranged below the chamber (1). The natural draft of the gases or produced by the burners will serve to ensure the conveyance in the desired direction. However, it is possible to add a gas compressor or exhaust fan (not shown). These pipes (2) are preferably arranged as a coil, with the final outlet at the lowest point.

The set of chambers (1) and pipes (2) is inserted inside the tank (3), so that its entire lateral surface is in contact with the water. The level of the water is controlled by any known means to ensure that this heat exchange occurs and the temperature of the wall does not raise too high.

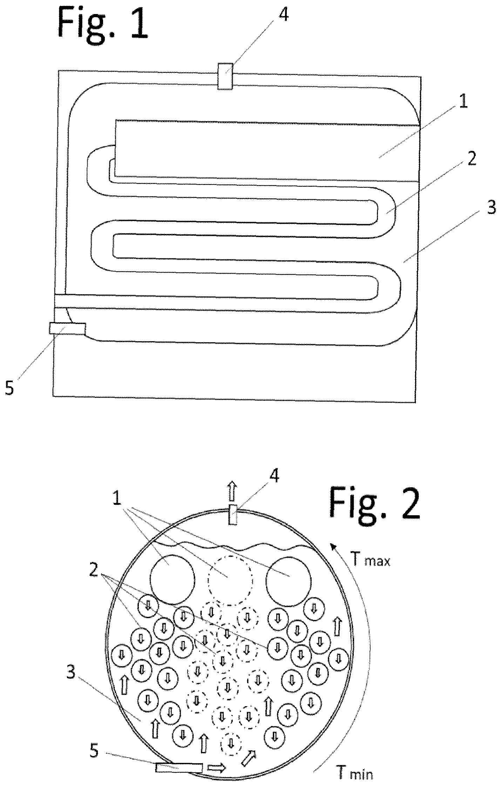

The use of several chambers (1) instead of just one makes it possible to increase the contact surface with smaller chambers (1), such that it allows to increase the travel of the pipes (2) inside the tank (3). An optimal solution is between 1 and 5 chambers (1). Figure 2 shows several pipes (2), marking in dashed lines the gas circuits of the central boiler to avoid confusion. The distribution of the pipes (2) by the tank (3) will be calculated so that the temperature gradient is the most suitable and reduces any eventual unwanted convection current. Figure 2 shows a solution with three chambers (1), the one in the centre and its pipes (2) in dashed lines, and indicating the temperature gradient on the right.

This solution allows, in one example, to use a boiler with 200 litres of water and raise the temperature to 150 °C in six minutes, with a flue gas outlet at 15 °C.

## Claims

1. A combustion boiler comprising one or more combustion chambers (1), a series of flue gas pipes (2) and a liquid tank (3) with an outlet (4) of vapour or hot liquid and an inlet (5) of cold liquid, **characterised in that**
the chambers (1) and the pipes (2) are submerged in the liquid of the tank (3), the chambers (1) being above the pipes (2);
the inlet (5) is at a lower point of the tank (3) and
the outlet (4) is at an upper point of the tank (3).

2. The boiler according to claim 1, **characterised in that** it comprises between one and five chambers (1).

3. The boiler according to claim 1, **characterised in that** the flue gas outlet is at the lowest point of the pipe (2).
